# EUROPEAN PATENT APPLICATION

(11) **EP 4 660 015 A1**
(43) Date of publication of application: **10.12.2025**
(21) Application number: 25177618.3
(22) Date of filing: 20.05.2025
(51) Int. Cl.: B60R 11/04

(54) **IMPROVED SUPPORT BRACKET FOR A VEHICULAR SENSOR SYSTEM**

(30) Priority: 05.06.2024 IT 202400012850
(71) Applicant: IVECO S.P.A., 10156 Torino (IT)
(72) Inventor: PUGNO, Enrico, 10156 TORINO (IT)
(74) Representative: Studio Torta S.p.A.

(57) **Abstract**

An adapter (20) to vary the relative position between a sensor system (4) in a housing (5) for vehicular use,
the adapter (20) comprising a bracket (21) suitable for being placed between the housing (5) and the sensor system (4) to vary the inclination of the sensor system (4) with respect to a vertical axis (C) of the housing (5).

## Description

### CROSS-REFERENCE TO RELATED APPLICATIONS

This patent application claims priority from Italian patent application no. 102024000012850 filed on June 5, 2024, the entire disclosure of which is incorporated herein by reference.

### TECHNICAL SECTOR

This invention relates to a bracket, in particular a bracket for a vehicle sensor.

This invention finds a preferred, though not exclusive, application in the support of a sensor such as an image acquisition system such as an assisted driving system. This application will be referred to below by way of example.

### PRIOR ART

It is well known that vehicles are increasingly equipped with driving assistance systems, also known as "ADAS" (Advanced Driving Assistance Systems). Such systems, as is well known, are designed to assist in the driving of a vehicle by providing the driver with safety-related signals or by enabling driving automations always aimed at increasing driving safety.

One such ADAS system is the so-called LDWS (Lane Departure Warning System) configured to warn the vehicle when it crosses the line of the lane in which the vehicle is moving and/or correct its trajectory.

This LDWS uses a sensor, such as an image acquisition device, for example a video camera.

This sensor system is installed in a specific area of the vehicle, for example in front of the windscreen, so that data can be acquired on the road space in front of the vehicle.

However, it is clear that the sensor device has to be installed with a specific inclination, so as to vary its field of view, in order to be suitable for the specific vehicle type/attitude. In fact, some vehicles have windshields that are more or less inclined with respect to the vertical and some vehicles have cabins that are more or less high above the ground.

Therefore, the sensor system must be precisely calibrated and secured within its housing for each different vehicle attitude and configuration, resulting in lost time and increased costs.

In the known systems, the housing is therefore specifically designed to provide a specific inclination to the sensor system and, therefore, suitable for use with a single vehicle/attitude.

There is, therefore, a need to solve the above-mentioned problems so that the sensor system can be fastened within a corresponding housing quickly and inexpensively.

The purpose of this invention is to meet the needs outlined above in an optimal and inexpensive way.

### SUMMARY OF THE INVENTION

The above-mentioned purpose is achieved with an adapter, a housing, a sensor system and a vehicle as claimed in the attached claims, which are an integral part of this description.

### BRIEF DESCRIPTION OF THE DRAWINGS

For a better understanding of this invention, a preferred embodiment is described below by way of non-limiting example and with reference to the accompanying drawings, wherein:

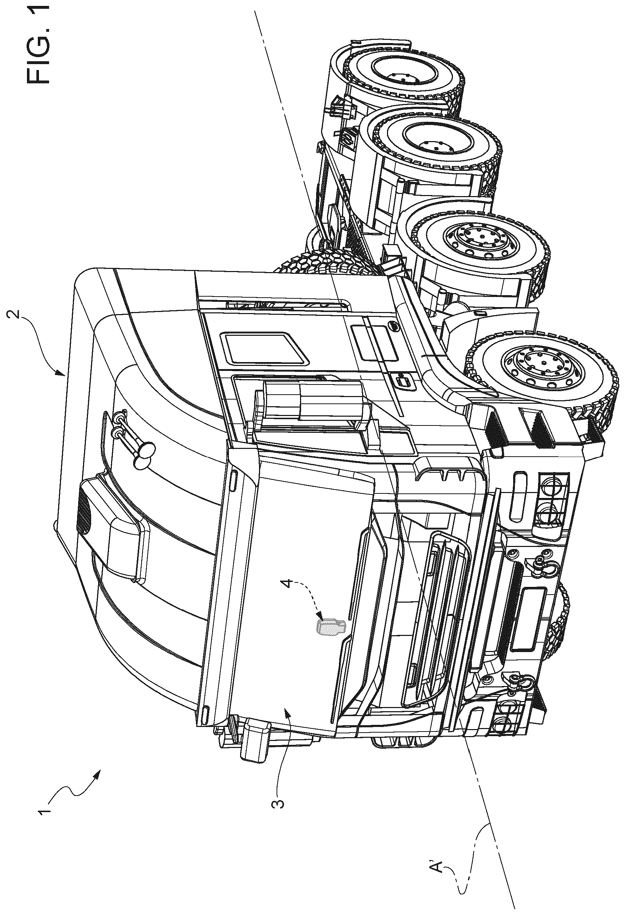

- Figure 1 = illustrates a vehicle equipped with a windscreen and a housing for a sensor system according to the invention;

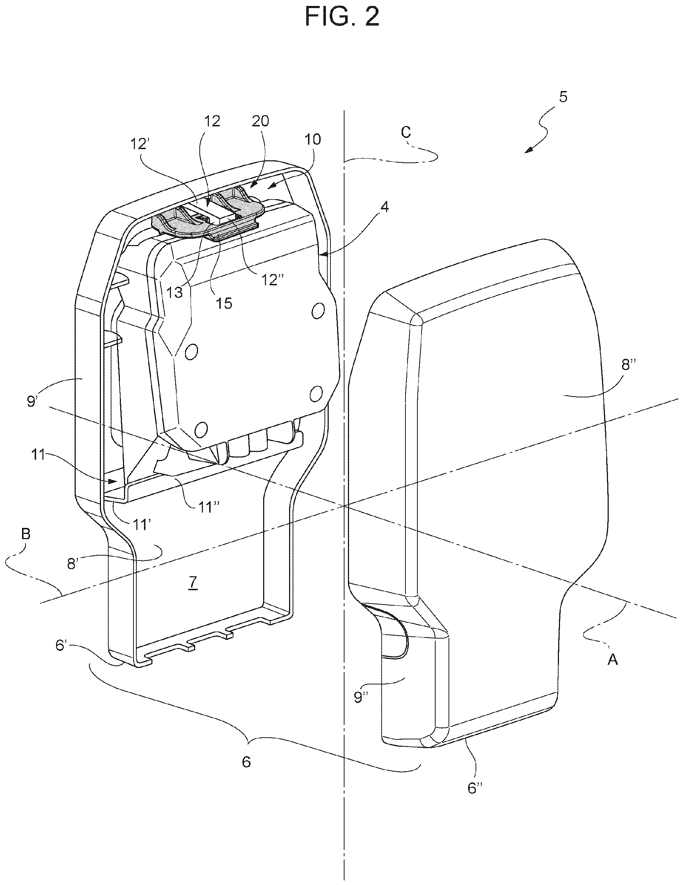

- Figure 2 = illustrates a perspective view with parts removed for clarity of the housing according to the invention;
- Figure 3 illustrates a perspective view of an element of the housing according to the invention; and
- Figures 4, 5 and 6 illustrate a top, front, side and rear view of the element in Figure 3, respectively.

### DETAILED DESCRIPTION OF THE INVENTION

In the attached figures, reference number 1 denotes a vehicle, of which a cabin 2 is illustrated; the cabin is mobile across the ground thanks to a chassis and multiple wheels, as known. The cabin 2 has, as is well known, a windscreen 3 placed in front of a longitudinal axis A' of the vehicle.

The vehicle 1 is equipped with an ADAS (Advanced Driving Assistance System) sensor system 4. Specifically, this sensor system 4 is supported by a portion of the vehicle 1 so as to define a detection field outside of it.

In the embodiment described, this sensor system 4 is supported by the cabin 2, in particular, by the windscreen 3 and directed along the longitudinal axis A' in such a way as to define a front detection field with respect to the path of the vehicle 1.

In further detail, the sensor system 4 is an LDWS (Lane Departure Warning System) sensor. Specifically, the sensor system 4 comprises image acquisition means, such as a video camera configured to detect an image in its detection field.

The vehicle 1 comprises an electronic unit, not illustrated, electrically connected to the sensor system 4 and comprising processing means for processing the data acquired by the latter to provide useful driving data to the driver and/or to control the vehicle's operating systems. Since these systems are known, they will not be described in further detail for the sake of brevity.

The sensor system 4 is advantageously housed within a housing 5 extending along its own longitudinal A, transverse B and vertical C axis.

The housing 5 essentially comprises a casing 6 configured to define a space 7 within which to house the sensor system 4. In particular, the casing 6 is shell-shaped and comprises a first element 6' and a second element 6" that can be selectively fixed to each other to define the aforementioned space 7.

One between the first and second element 6', 6'' defines an opening (not visible) to allow the sensor system 4 to look through it to acquire data in the respective detection field. Clearly, this opening is shaped according to the dimensions of the sensor system 4.

In the embodiment illustrated, the casing 6 is fixed to the windscreen 3 so that the first element 6' faces the windscreen 3 itself and defines the aforementioned opening. The second element 6' therefore faces inwards towards the cabin 3; therefore, in the embodiment illustrated, the longitudinal axes A' of the vehicle and A of the housing coincide.

However, it is clear that should the housing 5 be fixed to another window or vehicle portion, the relative positions of the aforementioned axes could vary.

Specifically, both the first and second elements 6', 6'' define a main wall 8', 8" and an edge 9', 9" extending cantilevered along the perimeter of the main wall 8', 8" along the longitudinal axis A. Once fixed together, the edges 9', 9" of the first and second elements 6', 6" are in relative contact isolating the space 7.

Either the first or the second element 6', 6", also comprises fixing means 10 configured to secure the sensor system 4 to it.

In the illustrated embodiment, the first element 6' comprises these fixing means 10 advantageously manufactured as a snap mechanism.

Advantageously, these fixing means 10 are equipped with a contact portion 11 and a connection portion 12. Advantageously, the contact portion 11 and the connection portion 12 are supported by the main wall 8'.

Specifically, the connection portion 12 is configured to cooperate in contact by coupling with an upper portion of the sensor system 4 along the vertical axis C while the contact portion 11 is configured to cooperate by contacting a lower portion of the sensor system 4 along the vertical axis C.

More specifically, the contact portion 11 comprises a "bracket" portion comprising a first wall 11' along the longitudinal axis A and a second wall 11" extending cantilevered from the first wall 11' on the opposite side of the main wall 8' along the vertical axis C, in particular, towards the connection portion 12.

Specifically, along the transverse axis B, the bracket portion, that is, both the first and second wall 11', 11'', extend essentially within the entire extension of the main wall 8', that is, within the entire space delimited by the edge 9'.

On the other hand, the connection portion 12 essentially comprises a tab 12' extending along the longitudinal axis A of and provided with a coupling portion 12" defining an indentation 13 extending vertically cantilevered from the end of the tab 12'.

The tab 12' and the coupling portion 12" are sized to cooperate in contact with a predefined coupling portion 15 on the sensor system 4 by exchanging a compression force. This coupling portion 15 may be an indented seat on the sensor system 4, as depicted, a hole, a protuberance or any other mechanical element designed to cooperate with the connection portion 12.

In particular, the aforementioned compression force is provided by the connection portion 12 that is sized to bend with respect to the sensor system 4 by imparting a force that reacts on the contact portion 11 to keep the sensor system 4 in a stable position.

The housing 5 also comprises an adapter 20 configured to be operatively interposed between the first element 6' of the casing 6 and the sensor system 4 to vary the inclination of the latter's detection field.

Specifically, the adapter 20 is configured to vary the coupling point of the connection portion 12, thus varying the inclination with respect to the vertical axis C of the sensor system 4.

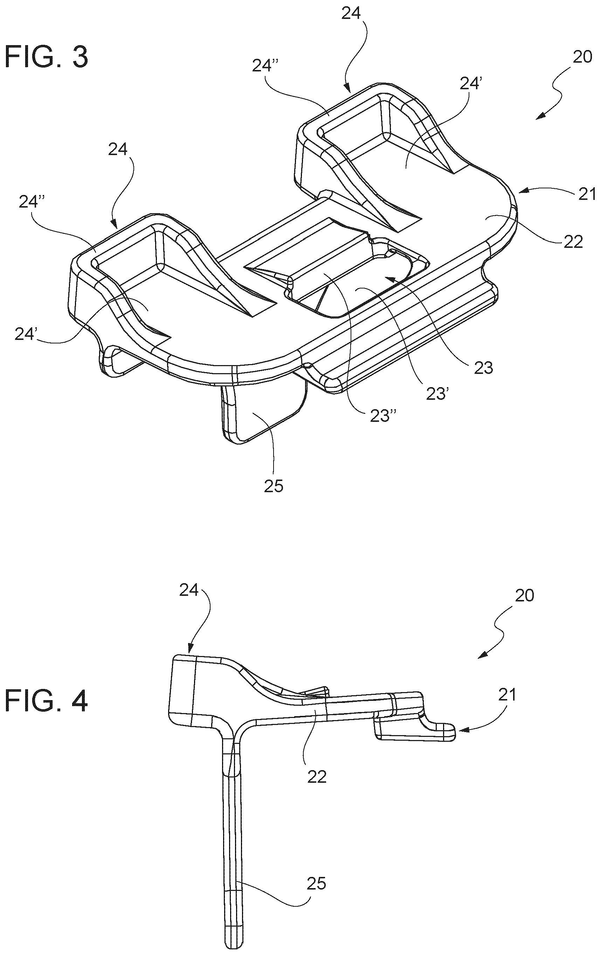

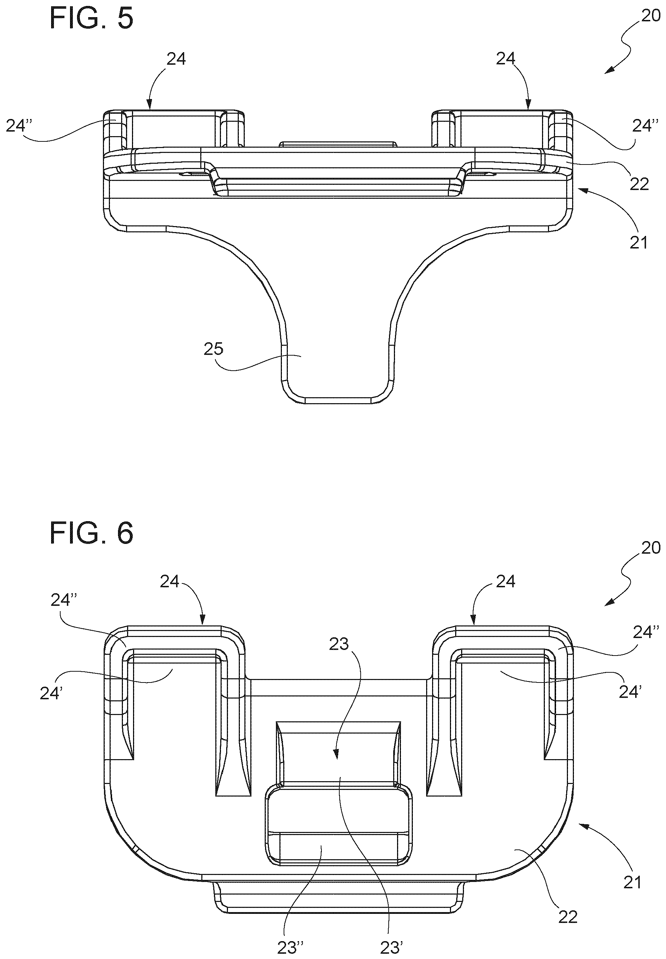

In particular, the adapter 20 comprises a bracket 21 shown in Figures 3 to 6.

The bracket 21 essentially comprises a main portion 22 configured to be placed above the sensor system 4. Specifically, the main portion 22 essentially comprises a flat wall extending across a plane defined by the longitudinal and transverse axes A, B.

Specifically, the bracket 21 defines a coupling portion 23. In the described embodiment, the coupling portion 23 comprises a hole 23' and a longitudinal shoulder 23" configured to cooperate in contact, similarly to the coupling portion 15 of the sensor system 4, with the connection portion 12.

Specifically, the bracket 21 also comprises a pair of protrusions 24 extending from a front edge, that is, facing away from the sensor system 4 along the longitudinal axis A with respect to the main portion 21.

Advantageously, the protrusions 24 are configured to cooperate in contact with the main wall 8' of the first element 6' of the casing 6 so as to keep the main portion 21 and thus the relative coupling portion 23 at a predefined distance from the main wall 8'.

In particular, the protrusions 24 comprise a base portion 24' and an edging 24" extending from the base portion 24' along its perimeter.

Advantageously, the protrusions 24 are spaced along the transverse axis B and are symmetrical with respect to it.

The bracket 21 also comprises a lower portion 25 extending cantilevered from the main portion 22 along the vertical axis C at the protrusions 24. This lower portion 25 is sized so as to cooperate in contact along the longitudinal axis A with the sensor system 4, in particular with one of its faces facing the first element 6' of the casing 6.

The bracket 21 also comprises a flange 26 extending cantilevered from the main portion 21 on the opposite side of the protuberances 24 and especially below it along the vertical axis C.

The flange 26 is sized to fit in the coupling portion 15 of the sensor system 4 when the adapter 20 is in use.

The operation of the embodiment of the adapter, the housing, the sensor system and the vehicle according to the invention described above is the following.

The sensor system 4 is fixed by means of the fixing means 10 to the casing and thus allows data to be detected in the detection field during vehicle operation.

If it is necessary to change the vehicle attitude or sensor system or to use the housing on another type of vehicle, it is necessary to interpose the adapter between the sensor system and the casing, thus obtaining a similar fixing but with a different inclination, adapted to the need.

From the above, the advantages of an adapter, a housing, a sensor system and a vehicle according to the invention are clear.

Thanks to the proposed housing, it is possible to arrange the sensor system at different angles without having to substantially modify the casing or provide complicated adjustment systems.

In fact, it is necessary to add or remove the bracket to allow the angle of the sensor system to be adjusted.

Again, by providing different brackets according to the type of vehicle, it is possible to provide optimised adjustment by minimally modifying the housing.

This reduces the production and maintenance costs.

As well as being compact and inexpensive, the bracket can be provided with existing systems, allowing them to be adapted.

Lastly, it is clear that modifications may be made to the adapter, housing, sensor system and vehicle, and variations produced thereto, according to this invention, without however departing from the scope of protection defined by the claims.

Clearly, the shape of the adapter can vary, allowing different fixing angles for the sensor system.

Again, the sensor system can be of various types, as can the shape of the casing.

As mentioned, the housing can be supported by different portions of the vehicle, inside or outside, or by different windows of the vehicle.

## Claims

1. An adapter (20) configured to be housed in a housing (5) for vehicular use and to cooperate in contact with a sensor system (4), said adapter (20)
comprising a bracket (21) suitable for being placed between said housing (5) and said sensor system (4) to vary the inclination of said sensor system (4) with respect to a vertical axis (C) of said housing (5), in which said bracket (21) comprises a main portion (22) configured to be housed above said sensor system (4) and a coupling portion (23) configured to cooperate with fixing means (10) carried by said housing (5).

2. The adapter according to claim 1, wherein said bracket (21) comprises at least one protrusion (24) extending from an edge of said main portion (22) along a longitudinal axis (A) of said housing and configured to cooperate in contact with said housing (5).

3. The adapter according to claim 2, wherein said bracket (21) comprises two protrusions (24) spaced apart along a transverse axis (B) of said housing.

4. The adapter according to one of the previous claims, comprising a lower portion (25) extending along said vertical axis (C) starting from said main portion (22) and configured to cooperate in contact along said longitudinal axis (A) with said sensor system (4).

5. The adapter according to one of the previous claims, comprising a flange (26) extending vertically below said main portion (22) along said vertical axis (C), said flange (25) being configured to cooperate in contact with a coupling portion (15) of said sensor system (4).

6. A housing (5) for a sensor system (4), said housing (5) comprising a casing (6) provided with a first and a second element (6', 6") connectable to each other, said housing (5) comprising an adapter (20) according to one of the previous claims interposed between one of said first and second elements (6', 6'') and said sensor system (4).

7. The housing according to claim 6, wherein said one of said first and second elements (6', 6'') comprises fixing means (10) configured to fix said sensor system (4) to said casing (6).

8. The housing according to claim 7, wherein said fixing means (10) comprise a snap mechanism.

9. The housing according to claim 7 or 8, in which said fixing means (10) comprise a connection portion (12) comprising a tab (12') and a coupling portion (12''), said tab (12 ') extending cantilevered along said longitudinal axis (A) with respect to said one of said first and second elements (6', 6") and carrying said coupling portion (12") on the opposite side of this, said coupling (12") being configured to impart a force between said sensor system (4) and said casing (6).

10. The housing according to claim 9, in which said coupling portion (12") cooperates in contact with said coupling portion (23) of said adapter (20) so as to impart said force.

11. The housing according to one of claims 7 to 10, wherein said fixing means comprise a contact portion (11) configured to support in contact a portion of said sensor system (4), said contact portion (11) being placed on the opposite side of said connection portion (12).

12. The housing according to claim 11, wherein said contact portion (11) is placed lower on the opposite side of said sensor system with respect to said connection portion (12) along said vertical axis (C).

13. An assembly comprising a housing according to one of claims 7 to 12, said housing (5) defining a space (7), said assembly comprising a sensor system (4) housed in said space (7).

14. A vehicle comprising an assembly according to claim 13.
